# EUROPEAN PATENT APPLICATION

(11) **EP 1 143 737 A2**
(43) Date of publication of application: **10.10.2001**
(21) Application number: 01302868.3
(22) Date of filing: 28.03.2001
(51) Int. Cl.: H04N 7/26

(54) **Image encoding apparatus and method, video camera, image recording apparatus, and image transmission apparatus**

(30) Priority: 30.03.2000 JP 2000097947
(71) Applicant: SONY CORPORATION, Tokyo 141 (JP)
(72) Inventor: Hashimoto, Yasuhiro, Shinagawa-ku, Tokyo (JP); Takashima, Masatoshi, Shinagawa-ku, Tokyo (JP); Narita, Hideyuki, Shinagawa-ku, Tokyo (JP); Hiranaka, Daisuke, Shinagawa-ku, Tokyo (JP)
(74) Representative: Robinson, Nigel Alexander Julian

(57) **Abstract**

An image encoding apparatus, comprising a dividing means for dividing an input image into N number of areas to generate N number of divided image signals corresponding to the areas; an encoding means for encoding the generated N number of divided image signals respectively to generate N number of encoded image signals, which encodes the image signals of the areas close to a boundary of the division by a predetermined encoding method and/or predetermined encoding conditions the same among the divided image signals giving less deterioration of the image quality in comparison with image signals of other areas; and an integrating means for integrating the generated N number of encoded image signals to generate a single encoded image signal in response to the input image.

## Description

The present invention relates to an image encoding apparatus and a method of same for compressing and encoding a moving picture signal, such as a high definition television (HDTV) signal, a video camera for photographing a desirable image, generating an image signal, encoding the image signal, and recording it, an image recording apparatus for recording the encoded image signal, and an image transmission apparatus for transmitting the encoded image signal.

As a moving picture encoding method, the MPEG-2 standard (ISO/IEC13818) has widely spread. The MPEG-2 introduces the concepts of a "profile" for mainly defining a classification of functions (difference of syntax) and a "level" for defining the difference of processing amounts such as image size and classifies supportable encoding performance. For example, the MP@ML (Main Profile at Main Level) is usually used for ITU-R601 images of 720 x 480 pixels and 60 fields/second and the MP@HL (Main Profile at High Level) is usually used for HDTV image of 1920 x 1080 pixels and 60 fields/second.

A very high speed processing is required for an apparatus for encoding and/or decoding a moving picture signal having a frame structure with a large number of pixels such as a HDTV signal, that is, an apparatus for executing the encoding and/or decoding of for example MP@HL, so realization is difficult and the apparatus becomes very expensive. In comparison with this MP@HL apparatus, an apparatus for MP@ML encoding and/or decoding is smaller in size and may operate at a lower speed. Further, it has been already been made into an LSI and spread widely, so it can be very cheaply realized.

Therefore, in a moving picture encoding and/or decoding apparatus disclosed in for example Japanese Unexamined Patent Publication (Kokai) No. 10-234043, a method of dividing a moving picture of a frame structure having a large number of pixels such as an HDTV signal to a plurality of pictures, encoding and/or decoding signals of the divided pictures by MP@ML devices, and integrating the results of the processing to carry out MP@HL encoding and/or decoding has been proposed.

Summarizing the disadvantages to be solved by the invention, in the image signal encoded by the method disclosed in Japanese Unexamined Patent Publication (Kokai) No, 10-234043, since processing for each of the divided pictures is carried out as processing for a picture, the image quality becomes discontinuous at the boundary of the pictures and suitable, high quality encoding cannot be carried out.

This disadvantage will be explained concretely with reference to the Fig, 13. In for example a P-picture of MPEG-2, when an object is moving from the left to the right of the picture and the object crosses the dividing boundary, a correct moving vector of a macroblock touching the dividing boundary in a right divided picture cannot be obtained if a left divided picture is not referred to. As the result, the deterioration of the image quality or the difference of the image quality with other macroblocks occurs in the macroblock in the boundary area and the picture becomes a cut-and-paste type picture, that is, the appropriate encoding cannot be carried out,

To solve such a disadvantage, there is an encoding apparatus in which, when a certain motion vector is defined over another divided image, image data is transmitted between encoders to obtain a correct motion vector. If this processing is carried out, discontinuity of the image quality at the dividing boundary does not occur and a video stream the same as the video stream resulting from encoding by one encoder can be output.

However, such an encoder requires large-scale hardware and becomes expensive since the image data is transmitted between a plurality of encoders. Further, the range of application of such an encoder is limited to ones exclusively for business.

Further, in the finally output video stream, a motion vector straddles divided images, This can be decoded by a decoder designed especially for MP@HL, but the video stream cannot be divided and decoded by a plurality of MP@ML decoders.

Further, as an apparatus for encoding and decoding a HDTV use moving picture signal by using a conventional MP@ML encoder and MP@ML decoder so that discontinuity of the image quality does not occur, there is the apparatus disclosed in Japanese Unexamined Patent Publication (Kokai) No. 10-234043. In this apparatus, images are overlapped and divided and the plurality of video streams output from the encoders are integrated to a system multiplexed stream by system multiplexing. Therefore, according to this apparatus, it is possible to decode the video stream into the HDTV image.

However, a video stream handled in this apparatus is fundamentally different from an MP@HL video stream, so the apparatus cannot be said to be a general-purpose encoder/decoder. For example, the video stream generated cannot be reproduced by a normal MP@HL decoder.

An object of at least preferred embodiments of the present invention is to provide a small, low priced image encoding apparatus able to encode a moving picture signal with a large number of pixels such as an HDTV signal without substantive deterioration of the image quality by combining existing small sized, low cost, low power, and simply configured encoding means and an image encoding method for the same.

Another object of at least preferred embodiments of the present invention is to provide a small and low price video camera able to encode and record a photographed image signal such as HDTV signal obtained by photographing a desired picture without the substantial deterioration of the image quality.

Still another object of at least preferred embodiments of the present invention is to provide a small, low priced image recording apparatus able to encode and record a moving picture signal such as an HDTV signal without substantive deterioration of the image quality.

Still another object of at least preferred embodiments of the present invention is to provide a small. Low priced image transmission apparatus able to encode and transmit a moving picture signal such as an HDTV signal without substantive deterioration of the image quality.

According to a first aspect of the present invention, there is provided an image encoding apparatus, comprising a dividing means for dividing an input image into N number of areas to generate N number of divided image signals corresponding to the areas; an encoding means for encoding the generated N number of divided image signals respectively to generate N number of encoded image signals, which encodes the image signals of the areas close to a boundary of the division by a predetermined encoding method and/or predetermined encoding conditions the same among the divided image signals giving less deterioration of the image quality in comparison with image signals of other areas; and an integrating means for integrating the generated N number of encoded image signals to generate a single encoded image signal in response to the input image.

Preferably, the encoding means encodes the image signals of the divided areas so that the degree of deterioration of the image quality changes gradually so that the degree of deterioration of the image quality becomes smaller the shorter the distance from the boundary.

Alternatively, the encoding means encodes image signals of images included in different areas close to the boundary by lowering the quantization scale. Preferably, the encoding means encodes image signals of images included in areas away from the boundary of the divided areas by raising the quantization scale.

Alternatively, the encoding means encodes macroblocks included in different areas close to the boundary under the same encoding conditions. Preferably, the encoding means encodes macroblocks included in different areas close to the boundary as intra macroblocks. More preferably, the encoding means encodes image signals of images included in different areas close to the boundary by lowering the quantization scale.

Alternatively, preferably, the encoding means encodes macroblocks included in different areas close to the boundary by a mode substantially not including motion compensation prediction. More preferably, the encoding means encodes macroblocks included in different areas close to the boundary by making the magnitude of the motion vector not more than a predetermined value.

Alternatively, the encoding means encodes the N number of divided image signals by N number of encoding devices able to operate in parallel. Preferably, the input image is an HDTV image, and the encoding device is a SDTV signal use encoding device.

According to a second aspect of the present invention, there is provide an image encoding method, including the steps of dividing an input image into N number of areas to generate N number of divided image signals corresponding to the areas; encoding the generated N number of image signals to generate N number of encoded image signals; and integrating the generated N number of encoded image signals to generate a single encoded image signal corresponding to the input image, wherein the encoding is carried out on image signals of the areas close to a boundary of the division by a predetermined encoding method and/or predetermined encoding conditions the same among the divided image signals giving less deterioration of the image quality in comparison with image signals of other areas.

Preferably, the encoding is performed so that the degree of deterioration of the image quality changes gradually so that the degree of deterioration of the image quality becomes smaller the shorter the distance from the boundary.

Alternatively, the encoding is performed on image signals of images included in different areas close to the boundary by lowering the quantization scale. Preferably, the encoding is performed on image signals of images included in areas away from the boundary of the divided areas by raising the quantization scale.

Alternatively, the encoding is performed on macroblocks included in different areas close to the boundary under the same encoding conditions. Preferably, the encoding is performed on macroblocks included in different areas close to the boundary as intra macroblocks. Alternatively, the encoding is performed on image signals of images included in different divided areas close to the boundary by lowering the quantization scale. Alternatively, the encoding is performed on macroblocks included in different areas close to the boundary by a mode substantially not including motion compensation prediction. Alternatively, the encoding is performed on macroblocks included in different areas close to the boundary by making the magnitude of the motion vector not more than a predetermined value.

Alternatively, the encoding is performed in parallel on the N number of divided image signals by N number of encoding devices. Preferably, the input image is an HDTV image, and the encoding device is a SDTV signal use encoding device.

According to a third aspect of the present invention, there is provided a video camera comprising a camera for photographing any image to generate an image signal; a dividing means for dividing the photographed image to N number of areas to generate N number of divided image signals corresponding to the areas based on the generated image signal; an encoding means for encoding the generated N number of divided image signals respectively to generate N number of encoded image signals, which encodes the image signals of the areas close to a boundary of the division by a predetermined encoding method and/or predetermined encoding conditions the same among the divided image signals giving less deterioration of the image quality in comparison with image signals of other areas; an integrating means for integrating the generated N number of encoded image signals to generate a single encoded image signal in response to the input image; and a recording means for recording the integrated encoded image signal on a recording medium.

According to a fourth aspect of the present invention, there is provided an image recording apparatus comprising a dividing means for dividing an input image to N number of areas to generate N number of divided image signals corresponding to the areas; an encoding means for encoding the generated N number of divided image signals respectively to generate N number of encoded image signals, which encodes the image signals of the areas close to a boundary of the division by a predetermined encoding method and/or predetermined encoding conditions the same among the divided image signals giving less deterioration of the image quality in comparison with image signals of other areas; an integrating means for integrating the generated N number of encoded image signals to generate a single encoded image signal in response to the input image; and a recording means for recording the integrated encoded image signal on a recording medium.

According to a fifth aspect of the present invention, there is provided an image transmission apparatus comprising a dividing means for dividing an input image to N number of areas to generate N number of divided image signals corresponding to the areas; an encoding means for encoding the generated N number of divided image signals respectively to generate N number of encoded image signals, which encodes the image signals of the areas close to a boundary of the division by a predetermined encoding method and/or predetermined encoding conditions the same among the divided image signals giving less deterioration of the image quality in comparison with image signals of other areas; an integrating means for integrating the generated N number of encoded image signals to generate a single encoded image signal in response to the input image; and a transmission means for transmitting the integrated encoded image signal.

Embodiments of the invention will now be described, by way of example only, with reference to the accompanying drawings in which:
Fig. 1 is a block diagram of the configuration of a moving picture encoding apparatus of a first example embodiment of the present invention;
Fig. 2 is a view for explaining an HDTV video signal input to the moving picture encoding apparatus shown in Fig. 1 and a dividing method of the picture;
Fig. 3 is a block diagram of the configuration of a divided image encoding device of the moving picture encoding apparatus shown in Fig. 1;
Fig. 4 is a view of the state of formation of intra macroblocks with respect to the vertical dividing boundary of the image signal of a P-picture;
Fig. 5 is a view for explaining a method for dividing an area in processing for correcting the quantization scale code in the dividing image encoding device shown in Fig. 3;
Fig. 6 is a view of a correction value of the processing for correcting the quantization scale code in the dividing image encoding device shown in Fig. 3;
Fig. 7 is a view for explaining an arrangement of a video stream broken down into units of slices;
Fig. 8 is a view for explaining another method of dividing an area in the processing for correcting the quantization scale code in the dividing image encoding device shown in Fig. 5;
Fig. 9 is a view for explaining still another method for dividing an area in the processing for correcting the quantization scale code in the dividing image encoding device shown in Fig. 5;
Fig. 10 is a view of the configuration of a video camera to which the moving picture encoding apparatus shown in Fig. 1 is applied;
Fig. 11 is a view of the configuration of an image recording apparatus to which the moving picture encoding apparatus shown in Fig. 1 is applied ;
Fig. 12 is a view of the configuration of an image transmission apparatus to which the moving picture encoding apparatus shown in Fig. 1 is applied; and

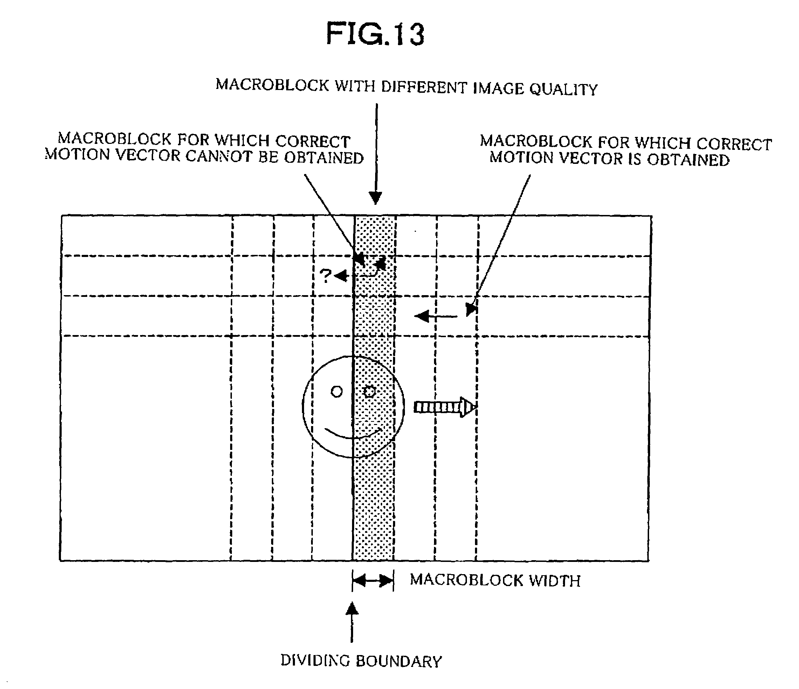

Fig. 13 is a view for explaining the relationship between divided areas and a moving vector.

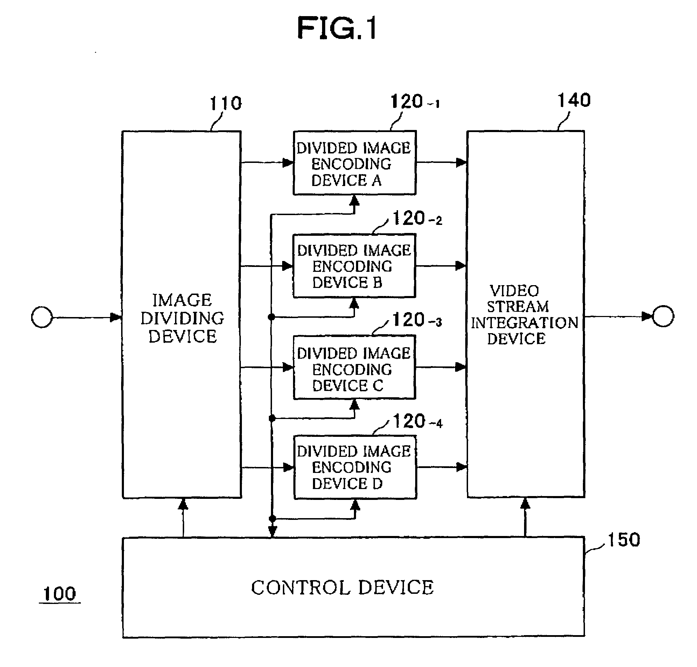

A moving picture encoding apparatus of a preferred embodiment of the present invention will be described with reference to Fig. 1 to Fig. 12.

First, an explanation will be given of the configuration of the moving picture encoding apparatus.

Figure 1 is a block diagram of the configuration of a moving picture encoding apparatus 100 of the present embodiment.

The moving picture encoding apparatus 100 comprises an image dividing device 110, first to fourth divided image encoding devices 120₋₁ to 120₋₄, a video stream integration device 140, and a control device 150.

The image dividing device 110 divides every frame of an input moving picture signal to four image signals corresponding to predetermined four areas and outputs these signals to the first to fourth divided image encoding devices 120₋₁ to 120₋₄.

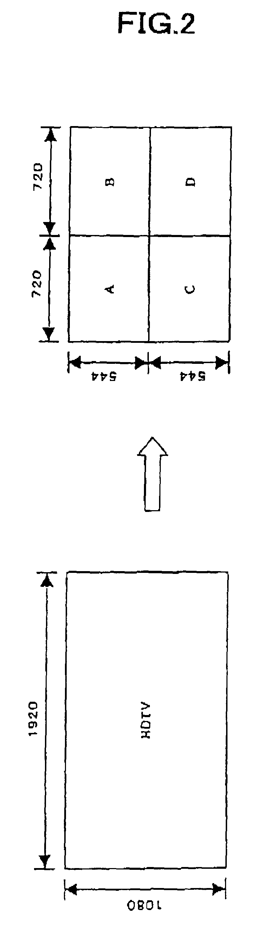

The moving picture image signal input to the moving picture image encoding apparatus 101 receives the HDTV signal shown in Fig. 2, that is, an interlace signal of a 4:2:2 format consisting of a luminance signal of horizontal 1920 pixels x vertical 1080 lines and a color difference signal of horizontal 960 pixels x vertical 1080 lines. Further, the frame rate is 30 frames/sec.

First, the image dividing device 110 processes such an input signal to convert the luminance signal to 1440 pixels in the horizontal direction and the color difference signal to 720 pixels in the horizontal direction by filtering.

Next, because the MPEG-2 standard requires that the number of lines in the interlace image in the vertical direction must be a multiple of 32 lines, both of the luminance signal and the color difference signal are given eight lines of dummy data under the image to obtain 1088 lines.

Then, the image dividing device 110 divides the image converted in size in this way to four areas A, B, C, and D, each having a luminance signal comprised of vertical 720 pixels x horizontal 544 lines,
as shown in Fig. 2 and outputs the image signals of the divided areas to the first to fourth divided image encoding devices 120₋₁ to 120₋₄.

The first to fourth divided image encoding devices 120₋₁ to 120₋₄ encode the image signals input respectively by the MPEG-2 method to generate MPEG-2 video streams and output them to the video stream integration device 140.

At this time, each of the divided image encoding device 120₋ᵢ (i=1 to 4) encodes by determining encoding conditions of each macroblock based on the positional relationship between the macroblock and the dividing boundary. Concretely, a divided image encoding device 120₋ᵢ determines a macroblock type and/or quantization scale code based on the relationship.

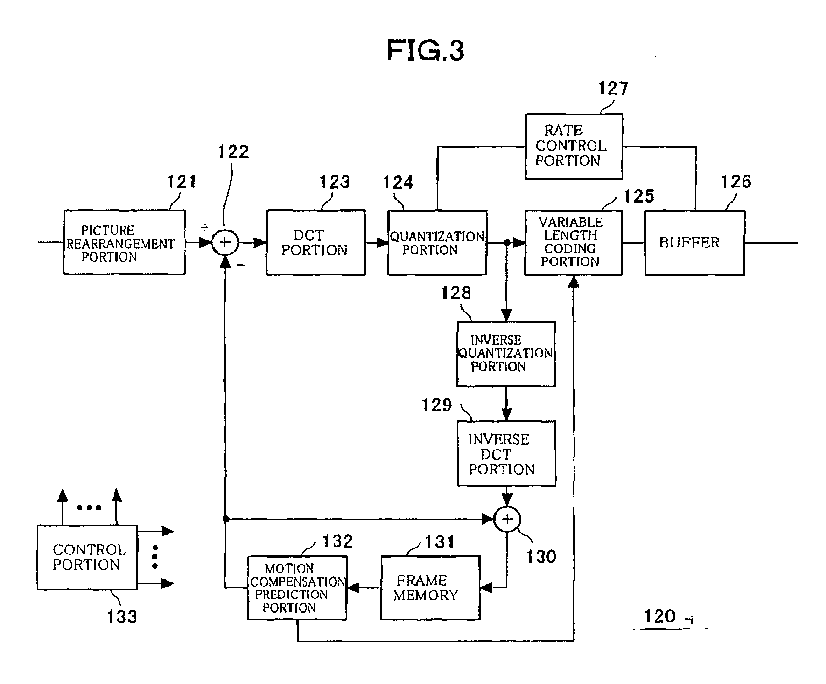

The configuration of a divided image encoding device 120₋ᵢ (i=1 to 4) is shown in Fig. 3.

As shown in Fig. 3, the divided image encoding device 120₋ᵢ comprises a picture rearrangement portion 121, an adder and/or subtracter 122, a DCT portion 123, a quantization portion 123, a variable length coding portion 125, a buffer 126, a rate control portion 127, an inverse quantization portion 128, an inverse DCT portion 129, an adder and/or subtracter 130, a frame memory 131, a motion compensation prediction portion 132, and a control portion 133.

The basic operation of this divided image encoding device 120₋ᵢ will be explained next.

In the divided image encoding device 120₋ᵢ, first, a not shown format converting portion converts the image signal of each of the successively input pictures from the 4:2:2 format to the 4:2:0 format, the image rearrangement portion 121 rearranges the converted signals of each picture based on the encoding picture type, and the DCT portion carries out a discrete cosine transform (DCT) in the order of encoding. At this time, if the image signal is one where the picture is a P-picture or B-picture and the macroblock is not an intra macroblock, the adder and/or subtracter 122 detects the predictive error with a motion compensation predictive image and the DCT portion applies a DCT to the predictive error.

Next, the quantization portion 124 quantizes the DCT coefficient obtained at the DCT portion 123, the variable length coding portion 125 encodes the quantized DCT coefficient with a motion vector and encoding mode information to a variable length code, and the buffer 126 stores the code.

An I-picture or P-picture has to be used later as a reference image in motion compensation prediction, so the inverse quantization portion 128 inversely quantizes the quantized DCT coefficient, the inverse DCT portion 129 applies inverse DCT to the inverse quantized DCT coefficient to generate an image signal, and the adder and/or subtracter 130 performs motion compensation processing on the image signal for partial decoding, whereby an image the same as one in a decoding apparatus is restored. The restored image is stored in the frame memory 131. The image stored in the frame memory 131 is suitably used for motion compensation prediction in the motion compensation prediction portion 132.

The amount of bits of the buffer 126 is constantly monitored by the rate control portion 127. The quantization at the quantization portion 124. is controlled to match with the target bits based on this.

Each of the divided image encoding apparatuses 120₋₁ carrying out this basic operation, in the present embodiment, determines the encoding macroblock type and the quantization scale code by the following method.

First, for the encoding macroblock type, the encoding macroblock type of macroblocks contacting a boundary dividing the original input image is forcibly made the intra macroblock.

Further, in the macroblocks further from the boundary, though the ratio of intra macroblock is forcibly decreased, though a predetermined ratio of the macroblocks are made intra macroblocks.

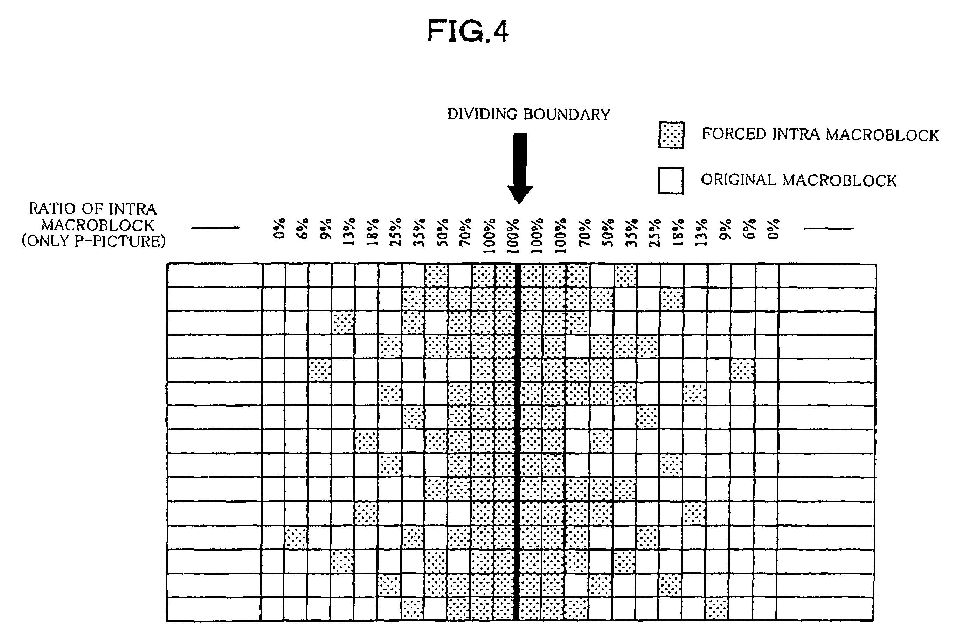

An example of the state where the encoding type of the macroblocks is forcibly made an intra macroblock in this way is shown in Fig. 4,

Figure 4 is a view of the state of formation of intra macroblocks with respect to the vertical dividing boundary of the image signal of a P-picture.

As shown in Fig. 4, all of the macroblocks in a row in contact with the dividing boundary and the macroblocks in the next row further from the dividing boundary are made intra macroblocks. Further, for every row away from the boundary in the two directions, the macroblocks of that row are converted to intra macroblocks at a ratio of 70%, 50%, 35%, 25%, 15%, 13%, 9%, and 6%.

Further, though the example shown in Fig. 4 shows the state for a vertical dividing boundary, similar processing is carried out for the horizontal dividing boundary.

Further, though the example shown in Fig. 4 shows a P-picture, similar processing is also carried out for a B-picture. Namely, this processing is not substantially carried out for an I-picture, because all of the macroblocks in the I-picture are intra macroblocks.

In the above method, the positions of the macroblocks which are made intra macroblocks are not fixed and are change at random for each picture.

Further, when changing the position of intra macroblocks at random, complete randomness is not necessary. There is no problem so long as the randomness is of an extent not giving the impression of regularity to a human viewer such as selecting macroblocks to be made intra macroblocks with reference to lower bits of values such as the ME residual or activity obtained as parameters of the macroblocks.

Further, it is desirable to use the lower bits of the parameters because the positions of the macroblocks which are made intra macroblocks can be found in advance at the time of operation tests of the hardware.

Further, for the determination of the quantization scale code, the quantization scale codes (Q scale codes) or the quantization scale (Q scale) of the macroblocks at both sides of the dividing boundary are made smaller.

Further, in the macroblocks in rows further from the dividing boundary as well, the Q scale code or the Q scale is made smaller, but the difference between the neighboring rows becomes smaller the further from the dividing boundary.

Further, in the macroblocks a certain distance from the dividing boundary, the Q scale code or the Q scale are conversely made larger.

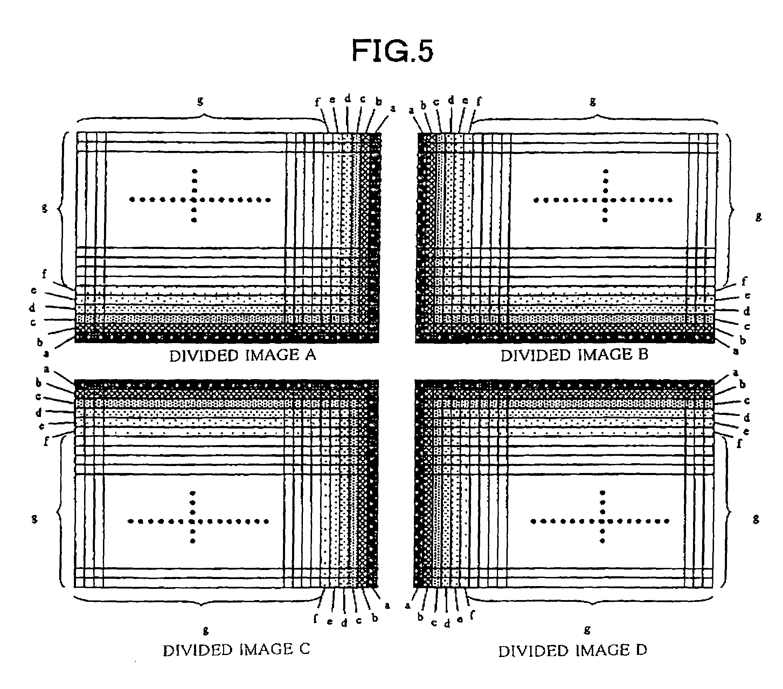

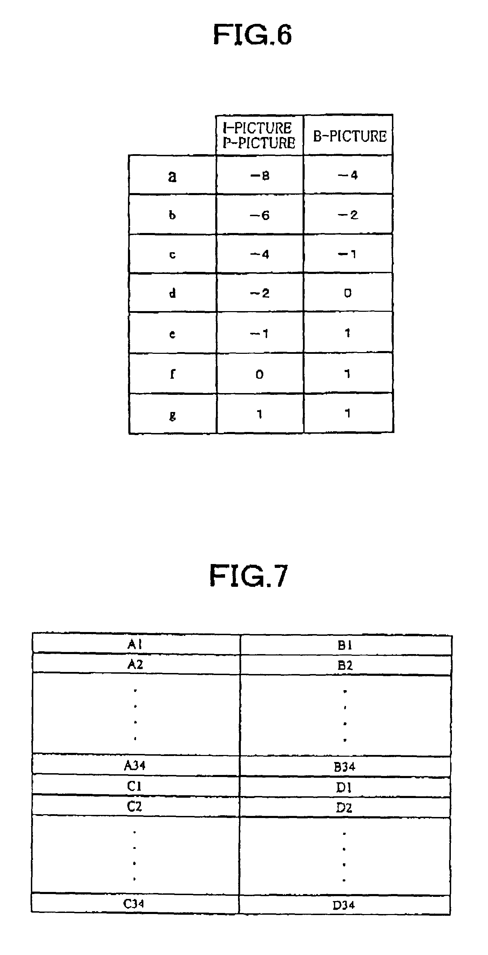

The processing mentioned above will be explained with reference to Fig. 5 and Fig. 6.

First, as shown in Fig. 5, seven regions of a to q are assigned to each of divided images A to D
in units of macroblocks based on the relationship of the positions of the divided images, that is, the position of the sides in contact with the dividing boundary.

Next, the usual encoding is carried out and the Q scale code is determined for every macroblock, then the Q scale codes of every macroblock are corrected based on the picture type and the region in which the macroblock is included as shown in Fig. 6. Further, if the Q scale code becomes less than the minimum value of 1 defined in the MPEG-2 standard due to the correction, the value of the Q scale code is set to 1.

Further, quantization is performed based on the corrected Q scale code.

Further, all of the processing is carried out by the control portion 133 controlling the portions of the divided image encoding device 120₋ᵢ.

Note that each of the divided image encoding devices 120₋₁ to 120₋₄ consists of a general MPEG-2 MP@ML encoder. With the NTSC system, however, it is sometimes only possible to handle up to vertical 480 lines. Therefore, in a divided image encoding device 120₋ᵢ of the present embodiment, encoding is carried out under the PAL mode which can handle up to vertical 576 lines. At that time, because the frame rate of the PAL mode is 25 frames/second, the clock frequency is raised to encode at 30 frames/second.

The video stream integration device 140 combines the four MPEG-2 MP@HL video streams output from the first to fourth divided image encoding devices 120₋₁ to 120₋₄ to generate a single MPEG-2 MP@HL video stream.

Namely, four MPEG-2 MP@ML video streams are broken down in units of slices and reconfigured to a single video stream to obtain a single MPEG-2 MP@HL video stream. At this time, a single one of the sequence, GOP, header data of picture level, extension data, and user data higher than the slice unit is sufficient. Therefore, only the video stream output from the first divided image encoding device 120₋₁ (divided image encoding device A) is used, and the video streams output from the second to fourth divided image encoding devices 120₋₂ to 120₋₄ (divided image encoding devices B to D) are discarded.

More concretely, the video stream integration device 140 outputs only the video stream output from the first divided image encoding device 120₋₁ (divided image encoding device A) and discards the video streams output from the second to fourth divided image encoding devices 120₋₂ to 120₋₄ (divided image encoding devices B to D) until the first slice start code appears in each of the four video streams output from the four divided image encoding devices 120₋₁ to 120₋₄ after the start of encoding in the first to fourth divided image encoding devices 120₋₁ to 120₋₄.

Further, simultaneously, it rewrites the parameters requiring rewriting for a single MPEG-2 MP@HL video stream, for example, the horizontal pixel size, vertical pixel size, aspect ratio information, bit rate, VBV buffer size, and VBV delay, according to instructions from a control unit 172 of the control device 170 or, if possible, to values found by calculation from the values of the video streams output from the divided image encoding devices 120₋ᵢ (i = 1 to 4).

Note that, when it is intended to rewrite the F code representing the search range of the motion vector to the same value in units of pictures in the first to fourth divided image encoding devices 120₋₁ to 120₋₄, conversion and rewriting of the value of the motion vector also become necessary and the processing becomes complex. Therefore, desirably the same value is set in advance in each divided image encoding device 120₋ᵢ (i = 1 to 4) from the control unit 172 before the encoding of each picture.

The video streams after the slice start codes are broken down into units of slices and, as shown in Fig. 7, are output rearranged in the order of A1, B1, A2, B2, ..., A34, B34, C1, D1, C2, D2, ..., C34, D34.

At this time, the value of the slice header representing vertical position information of a slice is rewritten to a correct value according to need. Further, the macro block address increment representing horizontal position information in the first macro block of the slice is rewritten to a correct value according to need.

Note that, if a sequence end code is output from a divided image encoding device after the video stream integration device 140 outputs the video stream of the slice D34, the video stream integration device outputs one sequence end code and ends the combination or waits for the input of the next sequence start code.

The control device 150 controls the parts so that the moving picture image encoding apparatus 100 carries out the intended operation.

Next, an explanation will be given of the operation of the moving picture encoding apparatus 100.

For example, when an HDTV video signal having a luminance signal of horizontal 1920 pixels x vertical 1080 lines and a color difference signal of horizontal 960 pixels x vertical 1080 lines is input to the moving picture encoding apparatus 100, first the image dividing device 110 converts the luminance signal to 1440 pixels in the horizontal direction and the color difference signal to 720 pixels in the horizontal direction. Further, it attaches 8 lines of dummy data in the vertical direction to the bottom of the image for both of the luminance signal and the color difference signal to obtain 1088 lines.

Then, it divides the image signal converted in this way to four regions A, B, C and D as shown in Fig. 2 and outputs them to the first to fourth divided image encoding devices 120-1 to 120₋₄.

The first to fourth divided image encoding devices 120-1 to 120₋₄ encode the input image signals each having vertical 720 pixels x horizontal 544 lines to generate the MPEG-2 video streams and output them to the video stream integration device 140.

At this time, each of the divided image encoding device 120₋ᵢ forcibly encodes certain macroblocks as intra macroblocks. Concretely, for example as shown in Fig. 4, it encodes as intra macroblocks the macroblocks contacting the dividing boundary and a predetermined number of macroblocks selected at random from every row to give a gradually decreasing ratio of intra macroblocks the further the row from the dividing boundary.

Further, each of the divided image encoding device 120₋ᵢ lowers the quantization scale code from the value shown in Fig. 6 for the macroblocks close to the dividing boundary as shown by the regions a to e (I-picture and P-picture) and regions a to c (B-picture) in Fig. 5 so as to decrease the deterioration of the image quality in the quantization. Further, it conversely increases the quantization scale code for macroblocks more than a certain distance away from the dividing boundary such as the region g in the quantization.

Then, the video stream integration device 140 integrates the four video streams output from the first to fourth divided image encoding devices 120₋₁ to 120₋₄ to one MPEG-2 MP@HL video stream, Namely, it breaks them down into units of slices and rearranges them in the order of A1, B1, A2, B2, ..., A34, B34, C1, D1, C2, D2, ..., C34, and D34 as shown in Fig. 3.

Then, the MPEG-2 MP@HL video stream generated in this way is output from the video stream integration device 140, multiplexed with an audio signal according to need, and then transmitted from the apparatus or recorded on a recording medium such as a video tape 300 as shown in Fig. 1.

In this way, the motion image encoding apparatus 100 of the present invention converts the macroblocks contacting the dividing boundary to intra macroblocks when the divided image encoding devices 120₋₁ carry out the MPEG-2 MP@Ml encoding so as to make the encoding conditions of two macroblocks existing on the two sides of the dividing boundary the same, so discontinuity of the image quality at the dividing boundary can be prevented.

Further, it selectively converts the macroblocks of rows further from the dividing boundary to intra macroblocks to give a smaller ratio of macroblocks converted to intra macroblocks the further from the dividing boundary. As the result, it is possible to prevent the macroblocks with different image quality from being arranged linearly and being discerned by the human eye.

Further, the positions of the macroblocks forcibly converted to intra macroblocks are not fixed and are changed at random for each picture, so the boundary between an area comprised of only intra macroblocks and another area is hard to discern by the human eye, that is, deterioration of the image quality is substantially prevented.

Further, the Q scale codes or Q scales of the two macroblocks on two sides of dividing boundary are made lower. Accordingly, deterioration of the image quality due to the encoding decreases, and the image quality of the two macroblocks on the two sides of the dividing boundary becomes close to the image quality of the original image. As the result, even if the encoding conditions of the macroblocks on the two sides of the dividing boundary are different and there is a difference in the deterioration of the image quality between the macroblocks, since the deterioration is small, humanly discernable discontinuity of the image quality does not occur and therefore deterioration of the image quality is substantially prevented.

Further, for macroblocks in rows further from the dividing boundary, it makes the Q scale codes or the Q scales smaller to give a gradually declining magnitude of the Q scale codes or the Q scales the further from the dividing boundary. By this, it is possible to prevent a new boundary of the image quality, that is, discontinuity of the image quality.

Further, the moving picture encoding apparatus 100 of the present invention conversely makes the Q scale codes or the Q scales of the macroblocks more than a certain distance away from the dividing boundary larger. By this, the amount of the bits generated from the macroblocks is reduced and the increase of the amount of bits generated near the dividing boundary can be canceled out, so an increase of the bits generated in one picture can be prevented.

In this way, the motion picture encoding apparatus 100 can prevent substantially visually discernable discontinuity of the image quality when dividing an input HDTV signal and encoding the results by a plurality of divided image encoding devices 120. Namely, the disadvantage of the discontinuity of the image quality at the dividing boundary of the HDTV motion picture signal can be eliminated.

As a result, it is possible to compress and encode an HDTV moving picture signal and generate an MPEG-2 MP@HL video stream by using existing small sized, low price, low power MPEG-2 MP@ML encoders.

By this, a compression and encoding apparatus for an HDTV moving picture signal giving a practical image quality can be realized using existing small sized, low price, and low power MPEG-2 MP@ML encoders.

Further, a decoding apparatus for an HDTV moving picture signal can be realized using existent, small scale, low price, and low power consumption MPEG-2 MP@ML decoders.

Note that, the moving picture encoding apparatus 100 of the present invention can be applied to various apparatuses.

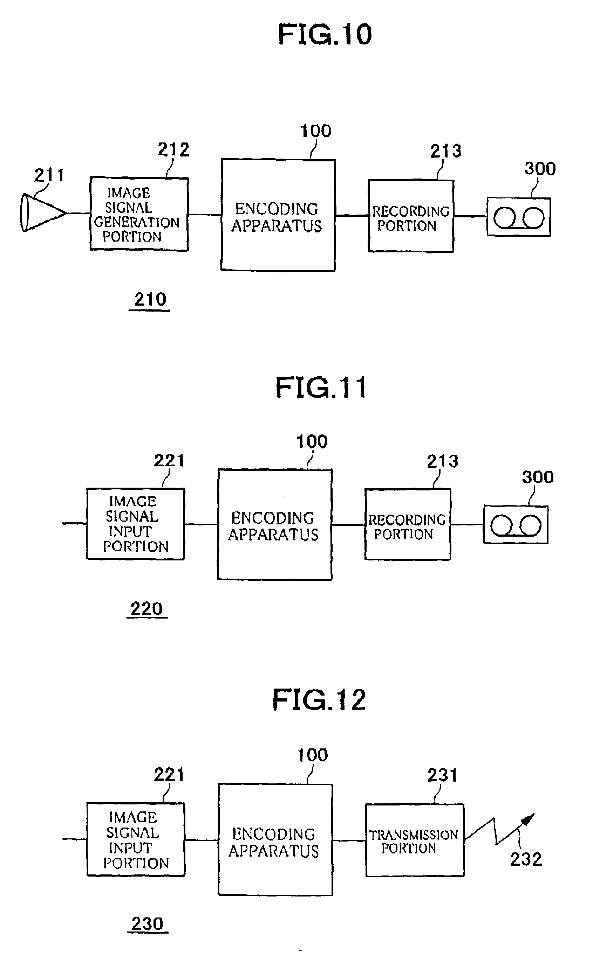

For example, it can be applied to a video camera apparatus 210 as shown in Fig. 10.

In the video camera apparatus 210 as shown in Fig. 10, the HDTV image signal is generated at an image signal generating portion 212 in response to an electrical signal generated by photographing in an optical system (camera) 211. This HDTV image signal is encoded to generate the HDTV MP@ML video stream in the motion picture encoding apparatus 100 according to the present invention. Then the generated MPEG-2 MP@HL video stream is recorded on a recording medium 300 by a recording portion 213.

In this way, a low price, small sized, and low power video camera apparatus for an HDTV signal can be provided.

Further, the invention can be applied to an image recording apparatus which simply encodes and records an input HDTV image signal as shown in Fig. 11.

In the image recording apparatus 220 shown in Fig. 11, an image signal input portion 221 receives an HDTV signal input from the outside, the moving picture encoding apparatus 100 according to the present invention encodes this HDTV signal, and a recording portion 213 records the generated HDTV MP@HL video stream on a recording medium 300.

In this way, a low price, small sized, and low power image recording apparatus for an HDTV signal can be provided.

Further, the invention can be applied to an image transmission apparatus which transmits an input HDTV image signal via a transmission line as shown in Fig. 12.

In the image transmission apparatus 230 shown in Fig. 12, an image signal input portion 221 receives an HDTV signal input from outside, then the moving picture encoding apparatus 100 according to the present invention encodes this HDTV signal to generate the MPEG-2 MP@HL video stream. Then, a transmission portion 231 carries out the encoding, modulation, etc. on the HDTV MP@HL video stream to generate a signal of a form suited to the transmission and transmits it to a desired destination via any transmission line 232.

By this way, a low price, small sized, and low power image transmission apparatus for an HDTV signal can be provided.

Note that the present invention is not limited to the above embodiments and includes modifications within the scope of the claims.

For example, in the above divided image encoding apparatus 120, the method for forcibly converting macroblocks to intra macroblocks at the time of encoding is not limited to the methods of the embodiments explained above. Any methods may be used.

For example, the processing for forcibly converting macroblocks to intra macroblocks may also be performed at only one of the vertical dividing boundary or the horizontal dividing boundary.

Further, the ratio of the macroblocks converted to intra macroblocks with respect to the distance from the dividing boundary and the pattern of the macroblocks converted to intra macroblocks are not limited to the example shown in Fig. 4.

They may be changed by every picture and changed by the position of the dividing boundary. Further, the processing may be stopped partially. At that time, it is possible to predict the possibility or degree of discontinuity of the image quality at the dividing boundary based on parameters obtained from the macroblocks from the encoders such as the ME residual, the activity, the flatness, and so on and to change the ratio and pattern of macroblocks converted to intra macroblocks adaptively in response to the same.

Further, the method for correcting the quantization scale code in the divided image encoding device 120 may be any method.

For example, the correction may be made by using any correction value other than the correction value shown in Fig. 6.

Further, the correction value for the B-picture may be made the same as the correction value of the I-picture and the P-picture.

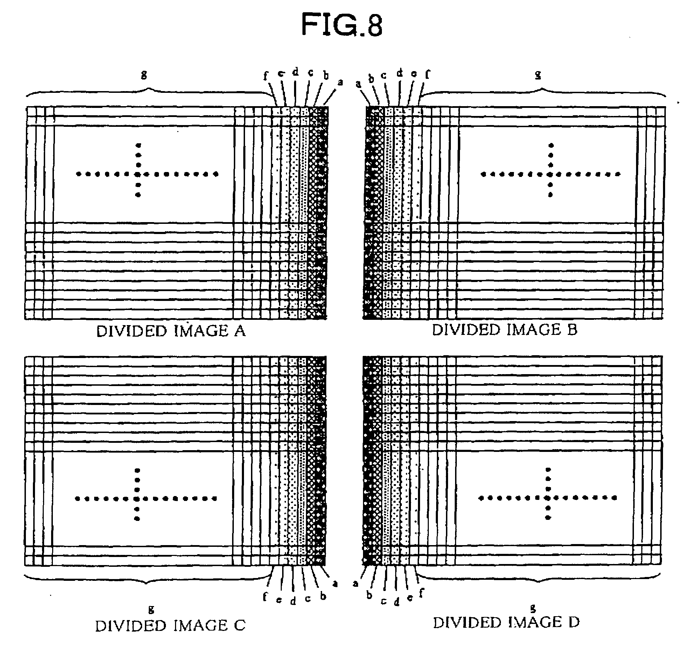

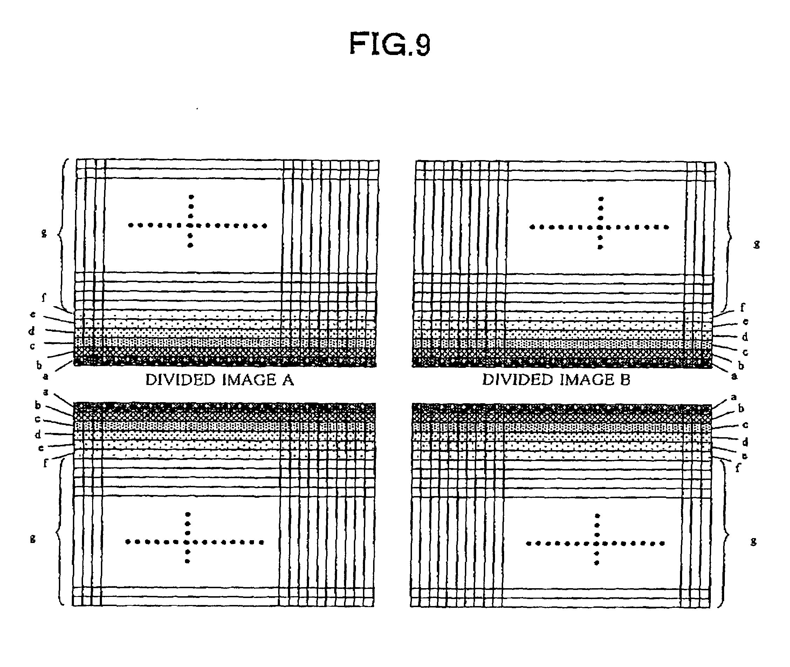

Further, the method for dividing areas to correct the quantization scale code is not limited to the example shown in Fig, 5. For example, the areas may be divided as shown in Fig. 8 and the processing performed only on the vertical dividing boundary. Conversely, the areas may be divided as shown in Fig. 9 and the processing performed only on the horizontal dividing boundary.

Further, the range of processing not need be from one end of the dividing boundary to the other. It may include part or a plurality of parts. That is, there may be parts which are not processed.

Further, the number of divided areas, that is, the number of areas where the correction values are changed, may also be any number.

Still further, the method of dividing areas and the correction values are not fixed and may be changed for each picture. At that time, it is possible to predict the possibility or degree of discontinuity of the image quality at the dividing boundary based on parameters obtained from the macroblocks from the encoders such as the ME residual, the activity, the flatness, and so on and to change the ratio and pattern of macroblocks converted to intra macroblocks adaptively in response to the same.

Further, in the moving picture encoding apparatus 100 of the present invention, two processings, that is, the processing for converting the type of macroblocks to intra macroblocks and the processing for correcting the quantization scale code, are carried out simultaneously.

However, any of the processings independently are effective to prevent the occurrence of the difference of the image quality at the dividing boundary, so the apparatus may carry out only one of them.

Of course, when the processing for forcibly converting macroblocks to intra macroblocks, the image quality at the dividing boundary where the processing is carried out tends to deteriorate, so an apparatus which simultaneously carries out the processing for changing the quantization scale code such as in the present embodiment is more effective.

Further, the gist of the present invention is to make the encoding conditions the same to prevent differences in the deterioration of the image quality, in other words, the difference of the image quality, near the dividing boundary, so as to realize divided encoding of an HDTV signal.

Accordingly, if making the encoding conditions substantially the same, in other words, making the level of the image quality of the results of the encoding the same, any method other than the method of changing the macroblock type or the method of correcting the quantization scale code explained above may be applied.

For example, by controlling the motion compensation prediction processing, processing may be carried out forcibly invalidating motion compensation prediction for a P-picture and forcibly making the motion vector (0,0) for a B-picture.

Further, by limiting the value of the motion vector, when a macroblock is near to the dividing boundary, the motion vector is forcibly made (0,0). As the distance from the dividing boundary becomes greater, the limitation of the value of the motion vector is eased such as up to +-1, up to +-2, .... By this, the discontinuity of the image quality at the dividing boundary and the unnaturalness of the image quality caused by the processing for removing the discontinuity may be eliminated.

Further, the motion picture encoding apparatus of the present invention may be applied to not only a video camera, image recording apparatus, and image transmission apparatus, but also other apparatuses.

Summarising the effects of at least preferred embodiments of the invention, in this way, a small and low price image encoding apparatus able to encode a moving price image encoding apparatus able to encode a moving picture signal with a large number of pixels such as an HDTV signal without substantive deterioration of the image quality by combining existing small sized, low cost, low power, and simple structure encoding means and an image encoding method can be provided.

Further, a small and low price video camera for photographing a desired picture and encoding and recording the photographed image signal such as an HDTV signal without substantive deterioration of the image quality can be provided.

Further, a small and low price image recording apparatus for encoding and recording a moving picture signal such as an HDTV signal without substantive deterioration of the image quality can,be provided.

Still further, a small and low price image transmission apparatus for encoding and recording a moving picture signal such as an HDTV signal without substantive deterioration of the image quality can be provided.

While the invention has been described with reference to specific embodiment chosen for purpose of illustration, it should be apparent that numerous modifications could be made thereto by those skilled in the art without departing from the basic concept and scope of the invention.

## Claims

1. An image encoding apparatus, comprising:
a dividing means for dividing an input image into N number of areas to generate N number of divided image signals corresponding to the areas;
an encoding means for encoding said generated N number of divided image signals respectively to generate N number of encoded image signals, which encodes the image signals of the areas close to a boundary of said division by a predetermined encoding method and/or predetermined encoding conditions the same among the divided image signals giving less deterioration of the image quality in comparison with image signals of other areas; and
an integrating means for integrating said generated N number of encoded image signals to generate a single encoded image signal in response to said input image.

2. An image encoding apparatus as set forth in claim 1, wherein said encoding means encodes the image signals of the divided areas so that the degree of deterioration of the image quality changes gradually so that the degree of deterioration of the image quality becomes smaller the shorter the distance from the boundary.

3. An image encoding apparatus as set forth in claim 1, wherein said encoding means encodes image signals of images included in different areas close to the boundary by lowering the quantization scale.

4. An image encoding apparatus as set forth in claim 3, wherein said encoding means encodes image signals of images included in areas away from the boundary of the divided areas by raising the quantization scale.

5. An image encoding apparatus as set forth in claim 1, wherein said encoding means encodes macroblocks included in different areas close to the boundary under the same encoding conditions.

6. An image encoding apparatus as set forth in claim 5, wherein said encoding means encodes macroblocks included in different areas close to the boundary as intra macroblocks.

7. An image encoding apparatus as set forth in claim 6, wherein said encoding means encodes image signals of images included in different areas close to the boundary by lowering the quantization scale.

8. An image encoding apparatus as set forth in claim 5, wherein said encoding means encodes macroblocks included in different areas close to the boundary by a mode substantially not including motion compensation prediction.

9. An image encoding apparatus as set forth in claim 5, wherein said encoding means encodes macroblocks included in different areas close to the boundary by making the magnitude of the motion vector not more than a predetermined value.

10. An image encoding apparatus as set forth in claim 1, wherein said encoding means encodes said N number of divided image signals by N number of encoding devices able to operate in parallel.

11. An image encoding apparatus as set forth in claim 10, wherein
said input image is an HDTV image, and
said encoding device is a SDTV signal use encoding device.

12. An image encoding method, including the steps of:
dividing an input image into N number of areas to generate N number of divided image signals corresponding to the areas;
encoding said generated N number of image signals to generate N number of encoded image signals; and
integrating said generated N number of encoded image signals to generate a single encoded image signal corresponding to said input image, wherein
said encoding is carried out on image signals of the areas close to a boundary of said division by a predetermined encoding method and/or predetermined encoding conditions the same among the divided image signals giving less deterioration of the image quality in comparison with image signals of other areas.

13. An image encoding method as set forth in claim 12, wherein said encoding is performed so that the degree of deterioration of the image quality changes gradually so that the degree of deterioration of the image quality becomes smaller the shorter the distance from the boundary.

14. An image encoding method as set forth in claim 12, wherein said encoding is performed on image signals of images included in different areas close to the boundary by lowering the quantization scale.

15. An image encoding method as set forth in claim 14, wherein said encoding is performed on image signals of images included in areas away from the boundary of the divided areas by raising the quantization scale,

16. An image encoding method as set forth in claim 12, wherein said encoding is performed on macroblocks included in different areas close to the boundary under the same encoding conditions.

17. An image encoding method as set forth in claim 16, wherein said encoding is performed on macroblocks included in different areas close to the boundary as intra macroblocks.

18. An image encoding method as set forth in claim 17, wherein said encoding is performed on image signals of images included in different divided areas close to the boundary by lowering the quantization scale.

19. An image encoding method as set forth in claim 16, wherein said encoding is performed on macroblocks included in different areas close to the boundary by a mode substantially not including motion compensation prediction.

20. An image encoding method as set forth in claim 16, wherein said encoding is performed on macroblocks included in different areas close to the boundary by making the magnitude of the motion vector not more than a predetermined value.

21. An image encoding method as set forth in claim 12, wherein said encoding is performed in parallel on said N number of divided image signals by N number of encoding devices.

22. An image encoding method as set forth in claim 21, wherein
said input image is an HDTV image, and
said encoding device is a SDTV signal use encoding device.

23. A video camera, comprising:
a camera for photographing any image to generate an image signal;
a dividing means for dividing said photographed image to N number of areas to generate N number of divided image signals corresponding to the areas based on said generated image signal;
an encoding means for encoding said generated N number of divided image signals respectively to generate N number of encoded image signals, which encodes the image signals of the areas close to a boundary of said division by a predetermined encoding method and/or predetermined encoding conditions the same among the divided image signals giving less deterioration of the image quality in comparison with image signals of other areas;
an integrating means for integrating said generated N number of encoded image signals to generate a single encoded image signal in response to said input image; and
a recording means for recording said integrated encoded image signal on a recording medium.

24. An image recording apparatus, comprising:
a dividing means for dividing an input image to N number of areas to generate N number of divided image signals corresponding to the areas;
an encoding means for encoding said generated N number of divided image signals respectively to generate N number of encoded image signals, which encodes the image signals of the areas close to a boundary of said division by a predetermined encoding method and/or predetermined encoding conditions the same among the divided image signals giving less deterioration of the image quality in comparison with image signals of other areas;
an integrating means for integrating said generated N number of encoded image signals to generate a single encoded image signal in response to said input image; and
a recording means for recording said integrated encoded image signal on a recording medium.

25. An image transmission apparatus, comprising:
a dividing means for dividing an input image to N number of areas to generate N number of divided image signals corresponding to the areas;
an encoding means for encoding said generated N number of divided image signals respectively to generate N number of encoded image signals, which encodes the image signals of the areas close to a boundary of said division by a predetermined encoding method and/or predetermined encoding conditions the same among the divided image signals giving less deterioration of the image quality in comparison with image signals of other areas;
an integrating means for integrating said generated N number of encoded image signals to generate a single encoded image signal in response to said input image; and
a transmission means for transmitting said integrated encoded image signal.
